# EUROPÄISCHE PATENTSCHRIFT

(11) **EP 2 072 107 B1**
(45) Veröffentlichungstag und Bekanntmachung des Hinweises auf die Patenterteilung: **25.04.2012**
(21) Anmeldenummer: 08021133.7
(22) Anmeldetag: 05.12.2008
(51) Int. Cl.: B01D 46/24, B01D 46/52, B01D 46/00

(54) **Filterplatte**
Filter panel
Plaque de filtre

(30) Priorität: 21.12.2007 DE 202007018078 U
(43) Veröffentlichungstag der Anmeldung: 24.06.2009
(73) Patentinhaber: Rapp, Peter, 74629 Pfedelbach (DE)
(72) Erfinder: Rapp, Peter, 74629 Pfedelbach (DE)
(74) Vertreter: Müller, Hans

(56) Entgegenhaltungen:
- EP-A- 0 351 850
- WO-A-03/015893
- WO-A-2005/051518

## Beschreibung

### TECHNISCHES GEBIET

Die Erfindung betrifft eine Filterplatte, deren Filtermedium oben gasdicht in einem Kopfstück und unten gasdicht in einem Fußstück befestigt ist. In ein Filtergehäuse können mehrere derartige Filterplatten austauschbar eingesetzt werden. Die mit Stäuben versehene Rohluft strömt quer durch die Filterplatte hindurch, wobei sich die Stäube an der Außenseite des Filterelementes absetzen. Zum Reinigen der Filterplatte wird Druckluft in Gegenrichtung durch das Filterelement stoßweise hindurchgedrückt um die an dem Filterelement abgelagerten Staubpartikel von dem Filterelement wieder zu entfernen. Die Staubpartikel fallen dabei nach unten von dem Filterelement und damit auch von der Filterplatte ab. Zum Erzielen einer möglichst großen Oberfläche ist das aus einem oder zwei Filterbahnen hergestellte Filtermedium mit einer doppelten Zickzackfaltung versehen, so dass die Filterbahn beziehungsweise die beiden Filterbahnen im Querschnitt rautenförmige hohle Räume aufweisen. Die gegenseitigen Berührpunkte der zickzackförmigen Filterbahnen sind fest miteinander verbunden.

### STAND DER TECHNIK

Es ist bekannt, die beiden Längsränder des Filterelementes an einem biegesteifen Längsprofil zu befestigen. Die zwischen sich das Filterelement in Querrichtung haltenden Längsprofile sind in dem Kopfstück und in dem Fußstück fest verankert. Auch das Filterelement ist zwischen den beiden Längsprofilen im Kopfstück und in dem Fußstück fest verankert. Es ist bekannt, das Längsprofil als T-Profil auszubilden. Von den beiden seitlichen Längsprofilen sind dieselben dann mit ihren jeweiligen Kopfstegen aufeinander zugerichtet. Die seitlichen Enden des Filterelementes sind an dem jeweiligen seitlichen Kopfsteg des betreffenden Längsprofils über eine klebeverbindung befestigt.

Statt des einen Vollquerschnitt aufweisenden T-Profils ist es aus der WO 2005/051518 bekannt, als Längsprofil ein Hohlprofil zu verwenden. Das Hohlprofil besitzt einen durchgehenden Längsschlitz, durch den die Enden der das Filterelement bildenden Filterbahnen hindurchgesteckt sind. Die Filterbahnenden werden im Inneren des Längsprofils festgeklemmt gehalten. Das Festklemmen der Filterbahnenden verkompliziert den Zusammenbau der Filterplatte.

### DARSTELLUNG DER ERFINDUNG

Ausgehend von diesem vorbekannten Stand der Technik liegt der Erfindung die Aufgabe zugrunde, eine wirtschaftlich günstig herzustellende Filterplatte anzugeben, ohne dabei in technischer Hinsicht Nachteile in Kauf nehmen zu müssen.

Diese Erfindung zeichnet sich dadurch aus, dass die in das Innere des als Hohlprofil ausgebildeten Längsprofils hineingeführten Filterbahnenden in dem Innenraum des betreffenden Längsprofils räumlich so sperrig lagemäßig vorhanden sind, dass das Filterelement in Querrichtung zugfest in dem Längsprofil verankert ist. Die Filterbahnenden des Filterelements können damit in Querrichtung lose in dem Hohlraum des Längsprofils platziert werden. Die räumlich sperrige Anordnung der Filterbahnenden im Innenraum des Längsprofils bleibt während des Betriebs der Filterplatte aufrechterhalten, so dass die im Innenraum des Längsprofils vorhandenen Bereiche der Filterbahn nicht durch den Längsschlitz des Längsprofils nach außen herausgezogen werden können. Die das Herausziehen unterstützenden Zugkräfte sind dadurch, dass die Längsprofile und auch die Filterbahnen im Kopf- und Fußbereich der Filterplatte fest verankert sind, auch nicht besonders groß.

Die in dem Innenraum des Längsprofils endenden Filterbahnbereiche sind so gefaltet und geformt, dass sie zumindest einen rautenförmigen Hohlraum aufweisen. Dieser rautenförmige Hohlraum ist im allgemeinen kleiner als die außerhalb des Längsprofils vorhandenen rautenförmigen Hohlräume. Der zumindest eine rautenförmige Innenraum endet in Querrichtung in zwei Filterbahnen. Diese beiden Filterbahnen sind voneinander weggebogen und lehnen sich dabei an den Innenwandbereichen des Längsprofils an. Da die Filterbahnenden an der Innenraumwand nicht festgeklebt werden müssen, ist der rautenförmige Hohlraum und damit der im Innenraum des Längsprofils vorhandene Bereich des Filterelementes in Querrichtung geringfügig verschiebbar angeordnet. Diese mehr theoretische als praktische Beweglichkeit ist für den ausreichenden Halt der Endbereiche in dem Längsprofil nicht schädlich.

Um die räumlich sperrige Anordnung der Filterbahnenden im Innenraum des Längsprofils aufrechtzuerhalten, können Aussteifungsmittel vorgesehen werden. Ein solches Aussteifungsmittel kann eine auf die Filterbahnen aufgebrachte Leimschicht sein. Diese Leimschicht kann lediglich bereichsweise oder auf den Querschnitt bezogen umlaufend durchgehend vorhanden sein. Es ist auch möglich, die Aussteifungsmittel wie insbesondere den Leimauftrag nur bereichsweise vorzusehen. Dabei kann es ausreichen, die Aussteifungsmittel und beispielsweise den Leimauftrag nur im mittleren Drittel zwischen dem Kopfstück und dem Fußstück vorzusehen, da hier die Beweglichkeit des Filterelementes in Querrichtung größer ist als in den an das Kopfstück und an das Fußstück angrenzenden Bereichen. Dabei ist es auch möglich, den rautenförmigen Innenraum vollständig mit einer Klebemasse auszufüllen. Dies könnte aus den vorstehend genannten Gründen vorzugsweise auch nur im mittleren Bereich zwischen dem Kopfstück und dem Fußstück vorgesehen werden.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine Seitenansicht einer erfindungsgemäßen Filterplatte,
- Fig. 2: eine stirnseitige Seitenansicht in Richtung des Pfeils 2 auf die Filterplatte nach Fig. 1,
- Fig. 3: einen Querschnitt durch das Filterelement in seinem mittleren Bereich zwischen dem Kopfstück und dem Fußstück, in einem Seitenbereich des Filterelementes, entsprechend einer ersten Ausführungsform der Erfindung,
- Fig. 4: eine Darstellung ähnlich der Fig. 3, gemäß einer zweiten Ausführungsform der Erfindung,
- Fig. 5: eine Darstellung ähnlich der Fig. 3, gemäß einer dritten Ausführungsform der Erfindung,
- Fig. 6: eine Darstellung ähnlich der Fig. 3, gemäß einer vierten Ausführungsform der Erfindung,
- Fig. 7: eine Darstellung ähnlich der Fig. 3, gemäß einer fünften Ausführungsform der Erfindung,

### WEGE ZUM AUSFÜHREN DER ERFINDUNG

Eine Filterplatte 10 besitzt ein Filterelement 12, das in Längsrichtung 14 oben in einem Kopfstück 16 und unten in einem Fußstück 18 des Filterelementes 12 gasdicht befestigt ist. In Querrichtung 20 ist das Element 12 in einem linken und rechten Längsprofil 22 befestigt. Die beiden Längsprofile 22 sind in gleicher Weise wie das Filterelement 12 im Kopfstück 16 und im Fußstück 18 befestigt. Jedes der beiden Längsprofile 22 ist als Hohlprofil und im vorliegenden Fall als sogenanntes C-Profil ausgebildet. Die außerhalb der beiden Längsprofile 22 vorhandene Filterbahn, die im vorliegenden Beispielsfall aus zwei Filterbahnen 24, 26 besteht, die jeweils zickzackförmig geformt und mit ihren aneinander liegenden Bahnbereichen über eine in Längsrichtung verlaufende Klebenaht oder Schweißnaht 28 fest miteinander verbunden sind und dadurch vergleichsweise große Rauten 30 als Hohlräume besitzen. Die beiden Seitenbereiche eines solchen Filterelementes 12 beziehungsweise seiner beiden Filterbahnen 24, 26 sind durch den Längsschlitz 32 des Längsprofils 22 in den Innenraum 34 desselben hineingeführt.

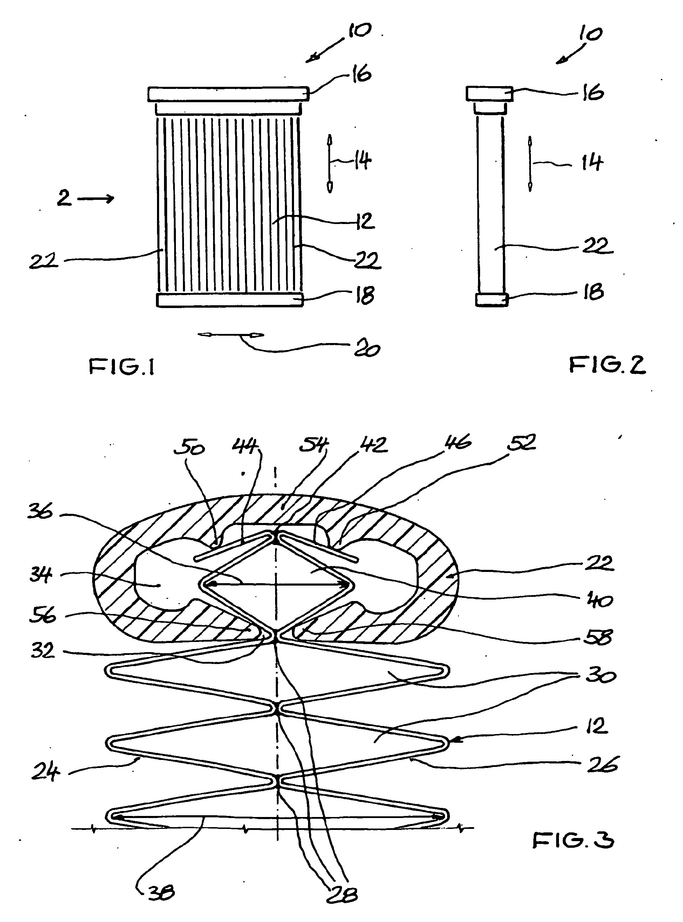

Bei dem in Fig. 3 dargestellten Ausführungsbeispiel sind im Innenraum 34 des Längsprofils 22 die beiden Filterbahnen 24,26 noch einmal zu einer vergleichsweise kleineren Raute 40 zickzackmäßig gefaltet und über eine entsprechende längs verlaufende Klebenaht 42 raumfest geformt. Die größere Querschnittsdiagonale 36 der kleineren Raute 40 ist kleiner als die größere Querschnitttsdiagonale 38 einer jeden größeren Raute 30. Die beiden Filterbahnenden 44, 46 der beiden Filterbahnen 24, 26 sind von der kleineren Raute 40 jeweils nach außen um im vorliegenden Fall fast 180 Grad herumgebogen und liegen an jeweils einer Auswölbung 50, 52 von innen an. Diese Auswölbungen 50, 52 ragen von der Außenwand 54 des Längsprofils 22 in den Innenraum 34 desselben hinein. Im vorliegenden Beispielsfall ist die Klebenaht 28 zwischen der letzten der vorhandenen großen Rauten 30 und der sich daran anschließenden kleinen Raute 40 zwischen dem linken und rechten Innenwandteil 56, 58 des Längsprofils angeordnet. Die Rautenform der Filterbahnen 24, 26 im Innenraum 34 verhindert, dass die beiden Filterbahnen 24, 26 und damit das Filterelement 12 in Querrichtung aus dem Längsschlitz 32 herausgezogen werden können beziehungsweise sich selbsttätig aus dem Längsschlitz 32 nach außen herausbewegen. Entsprechende Zugkräfte können insbesondere beim Abreinigen der Filterplatte 10 auftreten, wenn von außen Druckluft durch das Kopfstück 16 hindurch in das Filterelement 12 stoßweise hineingeblasen wird. Diese Druckluft strömt von innen nach außen durch die großen Rauten 30 des Filterelementes hindurch und sofern sich die Rauten 30 dabei jeweils nach außen auswölben und dabei die Filterbahnen 24, 26 voneinander wegbewegen, könnten entsprechende Zugkräfte in Querrichtung auftreten.

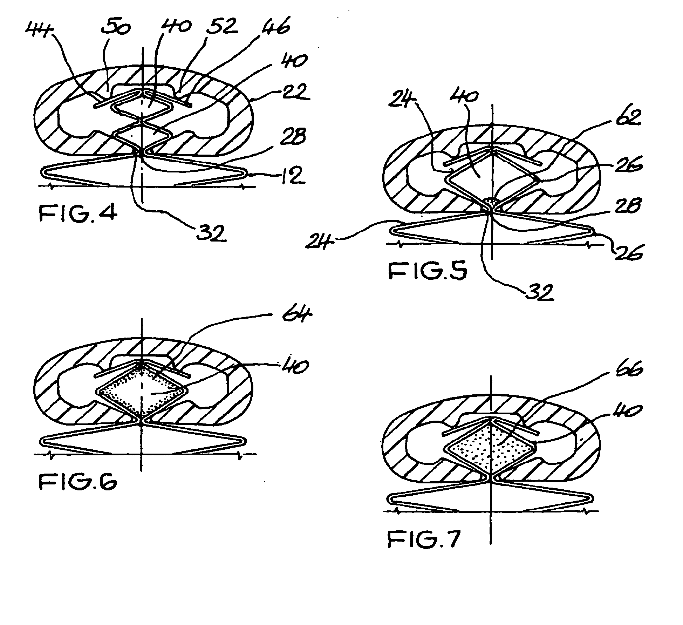

Bei der in Fig. 4 dargestellten Ausführungsform sind im Inneren des Längsprofils 22 mehr als eine kleine Raute 40, im vorliegenden Fall zwei kleine Rauten 40 ausgebildet. Je mehr Rauten 40 im Innenraum des Längsprofils ausgebildet sind, um so geringer wird die Gefahr, dass sich das Filterelement durch den Längsschlitz 32 nach außen herausbewegen könnte. Im Übrigen liegen die beiden Filterbahnenden 44, 46 von innen an den beiden Auswölbungen 50, 52 des Längsprofils 22 an, so wie das im Vorstehenden bereits beschrieben ist.

Bei der Ausführungsform gemäß Fig. 5 ist im Unterschied zur Ausbildung gemäß Fig. 3 eine Längsnaht 62 im Anschluss an die zwischen der großen Raute 30 und der kleinen Raute 40 vorhandene Naht 28 vorhanden. Diese im Inneren der Raute 40 vorhandene beispielsweise aus einem Klebematerial bestehende Längsnaht verklebt sich mit den beiden Filterbahnen und steift die kleine Raute 40 zumindest im Bereich des Längsschlitzes 32 so aus, dass im Bereich des Schlitzes 32 die Filterbahnen an einer weggespreizten Ausrichtung in der kleinen Raute 40 bleibend vorhanden sind. Diese sperrige Ausrichtung der Filterbahnen 24, 26 im Innenraum des Längsprofils 22 verhindert, wie bereits ausgeführt ist, dass das Filterelement 12 sich aus dem Längsprofil 22 herausbewegen könnte.

Bei der in Fig. 6 dargestellten Ausführungsvariante ist auf der Innenseite der kleinen Raute 40 im Querschnitt umlaufend eine Klebeschicht 64 aufgebracht. Diese Klebeschicht 64 kann ebenso wie die Klebe-Längsnaht 62 (Fig. 5) vorgesehen werden, nachdem das Filterelement 12 in den beiden Längsprofile 22 eingesetzt ist.

Bei dem in Fig. 7 dargestellten Ausführungsbeispiel ist der Innenraum der kleinen Raute 40 vollständig mit einem Klebemittel 66 ausgefüllt.

Die Endbereiche der Innenwandteile 56, 58 besitzen eine innere Schräge, die in etwa der Form der kleineren Raute 40 angepasst ist. Die kleinere Raute 40 kann sich dadurch (Fig. 4), muss sich aber nicht, flächig an den Innenwandteilen 56, 58 anlegen.

Die vorstehenden Klebemittel beziehungsweise Klebestreifen oder Klebenähte steifen die Filterbahnbereiche im Innenraum des betreffenden Längsprofils 22 so aus, dass deren räumlich gespreizte Anordnung zumindest bereichsweise vorhanden ist, so dass die im Innenraum des entsprechenden Längsprofils 22 vorhandenen Bereiche des Filterelementes 12 nicht aus dem betreffenden Längsprofil herausbewegt oder herausgezogen werden können.

## Patentansprüche

1. Filterplatte (10),
- mit einem Filterelement (12), bei dem in Querrichtung (20) mehrere in Rautenform (30, 40) gefaltete, in Längsrichtung (14) offene Hohlräume vorhanden sind,
- mit einem biegesteifen Längsprofil (22) an jedem der beiden Seitenränder der Filterplatte (10),
- wobei das Filterelement (12) in Querrichtung (20) durch einen offenen Schlitz (32) des jeweiligen Längsprofils (22) hindurch in den Innenraum (34) des betreffenden Längsprofils (22) hineinragt,
- mit einem Kopfstück (16) und einem Fußstück (18), in denen die Enden des Filterelementes (12) und der beiden Längsprofile (22) fest verankert sind,
- **dadurch gekennzeichnet, dass**
- das Filterelement (12) in seinem seitlichen Endbereich zumindest einen rautenförmigen Hohlraum (40) im Innenraum eines Längsprofils (22) aufweist,
- der in Querrichtung (20) letzte rautenförmige Hohlraum (40) im Innenraum eines Längsprofils (22) in Querrichtung (20) in zwei Filterbahnenden (44, 46) endet,
- die beiden Filterbahnenden (44, 46) voneinander weggebogen vorhanden sind und sich dabei an Innenwandbereichen (50, 52) der Außenwand (54) des Längsprofils (22) anlehnen, so dass das Filterelement (12) in Querrichtung (20) zugfest in jedem der beiden Längsprofile (22) verankert ist.

2. Filterplatte nach Anspruch 1,
- **dadurch gekennzeichnet, dass**
- jede Quersrhnittsdiagonale (36) des zumindest einen rautenförmigen Hohlraums (40) im Innenraum eines Längsprofils (22) kleiner ist als die größte Querschnittsdiagonale (38) der außerhalb der beiden Längsprofile (22) befindlichen rautenförmigen Hohlräume (30).

3. Filterplatte nach einem der vorstehenden Ansprüche,
- **dadurch gekennzeichnet, dass**
- zumindest auf Teilbereichen der Filterbahnen, die vom Innenraum (34) des Längsprofils (22) her an den Längsschlitz (32) angrenzen, ein Aussteifungsmittel für diese Filterbahnbereiche derart vorhanden ist, dass die im Innenraum des betreffenden Längsprofils (22) vorhandenen Filterbahnbereiche in Querrichtung (20) nicht aus dem betreffenden Längsprofil heraus bewegbar sind.

4. Filterplatte nach Anspruch 3,
- **dadurch gekennzeichnet, dass**
- zumindest ein im Innenraum (34) eines Längsprofils (22) vorhandener rautenförmiger Hohlraum (40) mit einem Aussteifungsmittel ausgefüllt oder an seinen Innenseiten mit einem Aussteifungsmittel zumindest bereichsweise ausgekleidet ist.

5. Filterplatte nach Anspruch 3 oder 4,
- **dadurch gekennzeichnet, dass**
- das Aussteifungsmittel ein Klebemittel (62, 64, 66) ist.

## Claims

1. Filter plate (10),
- having a filter element (12) in which multiple cavities which are folded in a diamond shape (30, 40) and are open in the longitudinal direction (14) are present in the transverse direction (20),
- having a rigid longitudinal profile (22) at each of the two lateral edges of the filter plate (10),
- the filter element (12) projecting in the transverse direction (20) through an open slot (32) of the respective longitudinal profile (22) into the interior (34) of the relevant longitudinal profile (22),
- having a head part (16) and a foot part (18) in which the ends of the filter element (12) and the two longitudinal profiles (22) are rigidly anchored,
- **characterized in that**
- the filter element (12) in its lateral end region has at least one diamond-shaped cavity (40) in the interior of a longitudinal profile (22),
- the last diamond-shaped cavity (40) in the transverse direction (20) ends, in the interior of a longitudinal profile (22), in two filter track ends (44, 46) in the transverse direction (20),
- the two filter track ends (44, 46) are bent apart from each other and thus bear against the inner wall regions (50, 52) of the outer wall (54) of the longitudinal profile (22) so that the filter element (12) is anchored in each of the two longitudinal profiles (22) so that it cannot be pulled out in the transverse direction (20).

2. Filter plate according to Claim 1,
- **characterized in that**
- each cross-sectional diagonal (36) of the at least one diamond-shaped cavity (40) in the interior of a longitudinal profile (22) is smaller than the largest cross-sectional diagonal (38) of the diamond-shaped cavities (30) situated outside the two longitudinal profiles (22).

3. Filter plate according to one of the preceding Claims,
- **characterized in that**
- at least on partial regions of the filter tracks which adjoin the longitudinal slot (32) from the interior (34) of the longitudinal profile (22), a stiffening substance is present for these filter track regions such that the filter track regions present in the interior of the relevant longitudinal profile (22) cannot escape from the relevant longitudinal profile in the transverse direction (20).

4. Filter plate according to Claim 3,
- **characterized in that**
- at least one diamond-shaped cavity (40) present in the interior (34) of a longitudinal profile (22) is filled with a stiffening substance, or is coated on its insides at least in certain regions with a stiffening substance.

5. Filter plate according to Claim 3 or 4,
- **characterized in that**
- the stiffening substance is an adhesive substance (62, 64, 66).

## Revendications

1. Plaque de filtration (10) comprenant
- un élément filtrant (12) renfermant, dans la direction transversale (20), plusieurs cavités ouvertes dans la direction longitudinale (14) et repliées en forme de losanges (30, 40),
- un profil longitudinal (22) rigide à la flexion, sur chacun des deux bords latéraux de ladite plaque de filtration (10),
- ledit élément de filtration (12) pénétrant dans l'espace interne (34) du profil longitudinal considéré (22), dans la direction transversale (20), en franchissant une fente ouverte (32) pratiquée dans le profil longitudinal considéré (22),
- une pièce frontale (16) et une pièce d'embase (18), dans lesquelles les extrémités dudit élément filtrant (12) et des deux profils longitudinaux (22) sont ancrées rigidement,
- **caractérisée par le fait**
- **que** l'élément filtrant (12) présente, dans sa région extrême latérale, au moins une cavité en forme de losange (40) dans l'espace interne d'un profil longitudinal (22),
- **que** la cavité en forme de losange (40) qui occupe la dernière position dans la direction transversale (20) s'achève, dans ladite direction transversale (20), par deux extrémités (44, 46) de nappes filtrantes dans l'espace interne d'un profil longitudinal (22),
- **que** lesdites deux extrémités (44, 46) de nappes filtrantes sont coudées à l'opposé l'une de l'autre, et prennent alors appui contre des régions intérieures (50, 52) de la paroi extérieure (54) dudit profil longitudinal (22), de sorte que ledit élément filtrant (12) est ancré avec résistance à la traction, dans la direction transversale (20), dans chacun des deux profils longitudinaux (22).

2. Plaque de filtration selon la revendication 1,
- **caractérisée par le fait**
- **que**, dans l'espace interne d'un profil longitudinal (22), chaque diagonale (36) couvrant la section transversale de la cavité en forme de losange (40), à présence minimale, est plus petite que la diagonale maximale (38) couvrant la section transversale des cavités en forme de losanges (30) qui se trouvent en dehors des deux profils longitudinaux (22).

3. Plaque de filtration selon l'une des revendications précédentes,
- **caractérisée par le fait**
- **qu'**au moins dans des régions partielles des nappes filtrantes qui sont limitrophes de la fente longitudinale (32) à partir de l'espace interne (34) du profil longitudinal (22), un moyen de rigidification, dédié à ces régions desdites nappes filtrantes, est agencé de façon telle que les régions desdites nappes filtrantes qui sont présentes dans l'espace interne du profil longitudinal considéré (22) ne puissent pas être extraites, dans la direction transversale (20), hors dudit profil longitudinal considéré.

4. Plaque de filtration selon la revendication 3,
- **caractérisée par le fait**
- **qu'**au moins une cavité en forme de losange (40), présente dans l'espace interne (34) d'un profil longitudinal (22), est comblée par un moyen de rigidification ou est revêtue d'un moyen de rigidification sur ses faces intérieures, au moins par zones.

5. Plaque de filtration selon la revendication 3 ou 4,
- **caractérisée par le fait**
- **que** le moyen de rigidification est un agent adhésif (62, 64, 66).
